# EUROPÄISCHE PATENTANMELDUNG

(11) **EP 0 908 749 A1**
(43) Veröffentlichungstag der Anmeldung: **14.04.1999**
(21) Anmeldenummer: 98402092.5
(22) Anmeldetag: 21.08.1998
(51) Int. Cl.: G02B 6/44

(54) **Optisches Element mit verklebten Einheiten**

(30) Priorität: 10.10.1997 DE 19744937
(71) Anmelder: ALCATEL, 75008 Paris (FR)
(72) Erfinder: Weiss, Alexander, Dr., 41066 Mönchengladbach (DE); Nothofer, Klaus, 40699 Erkrath (DE)
(74) Vertreter: Mende, Eberhard, Dipl.-Ing.

(57) **Zusammenfassung**

Vorgeschlagen wird ein langgestrecktes optisches Element mit einem Kern (2, 11), auf dessen Oberfläche (6, 14) mehrere optische Übertragungseinheiten, die in Längsrichtung des Elementes verlaufen, mit einer Schicht (3, 13) eines Heißschmelzklebers fixiert sind, wobei die Schicht (3, 13) durch Hohlräume (7) verläuft, die zwischen der Oberfläche (6, 14) des Kerns (2, 11) und den Übertragungseinheiten vorhanden sind, wobei der Schmelzkleber wasserquellbar ist und die Schichtdicke des Schmelzklebers kleiner als der Durchmesser der Übertragungseinheiten ist. Weiterhin wird ein Verfahren zur Herstellung des Elementes beschrieben.

## Beschreibung

Die Erfindung bezieht sich auf ein optisches Element gemäß dem Oberbegriff des Anspruchs 1 sowie ein Verfahren zu seiner Herstellung.

Bei langgestreckten, optischen Elementen, etwa Adern oder Kabeln, ist die Längswasserdichtigkeit von erheblicher Bedeutung. Vielfach weisen die Einheiten des Elementes keine zueinander komplementären Oberflächen auf, beispielsweise wenn sie ausschließlich aus Einheiten mit kreisförmigem Querschnitt bestehen. Zwischen den Einheiten verbleiben daher Hohlräume und Spalte, entlang derer sich Feuchtigkeit ausbreiten kann. Zur Erzeugung eines massiven, wasserdichten Querschnittes sind die Hohlräume meist mit einer Füllung versehen, etwa Petrolat oder einem wasserquellfähigen Pulver. Ansonsten besteht die Gefahr, daß sich an Verbindungsstellen oder Beschädigungen eindringendes Wasser im Inneren des Elementes ausbreitet und seine mechanischen und optischen Eigenschaften beeinträchtigt, insbesondere wenn das Wasser bei niedriger Temperatur gefriert.

Aus der EP 0 261 000 B1 ist es entsprechend bekannt, wasserquellbare Materialien in Hohlräume eines Kabels einzubringen. Das Material dichtet den Hohlraum bei Feuchtigkeitszutritt ab und verhindert somit die weitere Ausbreitung von Wasser entlang des Kabels. Gegebenenfalls befindet sich das Material auf der Oberfläche eines wasserdichten Kunststoffträgers, der die Handhabung erleichtert und auf Grund seines Eigenvolumens im Zusammenwirken mit wasserdichten Verdrängungskörpern die mit quellbarem Material auszufüllenden Querschnitte reduziert.

Die Offenlegungsschrift DE 42 28 956 A1 schlägt vor, die Fasern einer optischen Ader auf einem zugfesten Kern festzulegen, indem sie in eine Schicht eines Heißschmelzklebers eingebettet werden, welche den Kern umschließt. Durch diese Fixierung und die derart ermöglichte, definierte Anordnung der Fasern wird der Anschluß des Elementes, etwa an ein Endgerät, erleichtert. Die Längswasserdichtigkeit wird in diesem Fall sichergestellt, indem der Schmelzkleber zwischen Fasern und Kern verbleibende Hohlräume ausfüllt. Zudem werden jeweils ein oder mehrere Elemente in ein Schutzrohr aus Metall oder Kunststoff eingebracht, das mit einer Dichtmasse gefüllt ist.

Weiterhin sind zur Abdichtung optischer Kabel wasserquellbare Heißschmelzkleber bekannt, die aus einem Copolymer von Ethylen und Vinylacetat bestehen. Ein derartiger Schmelzkleber ist beispielsweise unter der Bezeichnung Macromelt Q4402 des Herstellers Henkel KGaA (Düsseldorf) erhältlich. Aufgrund hoher Kosten kommt das Material für die Abdichtung optischer Elemente jedoch insbesondere im Fall großer Fertigungsmengen in der Regel nicht in Betracht.

Vor diesem Hintergrund hat sich die Erfindung die Entwicklung eines optischen Elementes zur Aufgabe gestellt, das sich durch eine sichere Längsabdichtung bei geringen Kosten auszeichnet.

Diese Aufgabe wird erfindungsgemäß durch die kennzeichnenden Merkmale des Anspruches 1 gelöst. Vorteilhafte Ausgestaltungen zeigen die Unteransprüche.

Der grundlegende Gedanke der Erfindung besteht darin, daß sich bei der Abdichtung optischer Elemente insbesondere solche Hohlräume als problematisch erweisen, die zwischen der Oberfläche eines wasserdichten Kerns und darauf festgelegten Übertragungseinheiten, beispielsweise optischen Fasern oder Adern, verbleiben. Bei dichter Packung der Übertragungseinheiten dringen flüssige Füllmittel nur schlecht in diese Hohlräume ein, so daß eine hinreichende Längswasserdichtigkeit nicht gewährleistet ist. Für eine Reihe von Anwendungen ist es zudem erwünscht, daß die eingesetzten Kabel trocken sind, also in ihrem Querschnitt keine flüssigen Füllmassen wie Petrolat enthalten. Bei Ausfüllung des Hohlraumes mit einem festen Werkstoff, etwa einem ausgehärteten Schmelzkleber, können jedoch Risse entstehen, die eine Feuchtigkeitsausbreitung ermöglichen. Das Einbringen quellbarer Materialien in diese Hohlräume, etwa in Form von Quellfäden auf der Kernoberfläche, ist gleichfalls aufwendig und erfordert bei kleinen Querschnitten der Hohlräume eine hohe Fertigungspräzision.

Davon ausgehend wird vorgeschlagen, die Übertragungseinheiten mit einem wasserquellbaren Schmelzkleber auf der Oberfläche des Kerns festzulegen. Dabei verläuft die Schicht des Klebers über den gesamten Kernumfang, also auch durch Hohlräume, die zwischen Kern und Übertragungseinheiten verbleiben. Der Kern besteht aus einem mechanisch festen Material und bildet eine Zug- und gegebenenfalls Stauchentlastung für die Übertragungseinheiten. Somit vermag das Element mechanische Belastungen aufzunehmen, so daß es sich beispielsweise als Bestandteil eines optischen Erd- oder Luftkabels eignet. Außenseitig weist das Element eine Hülle oder einen Mantel zum Schutz vor mechanischen Beschädigungen und Feuchtigkeit auf.

Der Schmelzkleber wird lediglich in einer dünnen Schicht auf die Oberfläche des Kerns aufgebracht, deren mittlere Dicke kleiner als der Durchmesser der Übertragungseinheiten ist. Bevorzugt ist die mittlere Schichtdicke kleiner als der Radius der Übertragungseinheiten. Werden die Übertragungseinheiten in den flüssigen Schmelzkleber eingedrückt, so füllt er Hohlräume zwischen den Übertragungseinheiten und dem Kern zum Teil oder vollständig aus, tritt jedoch daraus nicht oder allenfalls zum geringen Teil aus. Zwischenräume, die zwischen den Übertragungseinheiten und äußeren Hüllschichten des Elementes verbleiben, werden dagegen mit anderen, herkömmlichen Dichtmassen oder quellbaren Elementen, etwa einem Quellvlies, sowie ggf. wasserdichten Füllstoffen ausgefüllt.

Der Vorteil des erfindungsgemäßen Elementes ist speziell seine hervorragende Längswasserdichtigkeit, da der wasserquellbare Schmelzkleber eine Feuchtigkeitsausbreitung entlang der Oberfläche des Kerns sicher ausschließt. Dies gilt auch dann, wenn in diesem Bereich geringe offene Bereiche in den Hohlräumen verbleiben, da der Schmelzkleber sie bei Feuchtigkeitszutritt ausfüllt. Weiterhin vereinfacht sich die Fertigung des Elementes, weil ein aufwendiges Einbringen festen Dichtungsmaterials in die vergleichsweise kleinen Hohlräume an der Kernoberfläche entfällt. Zudem ist das Element preiswert, da die verwendete Menge des Klebstoffes gering ist. Schließlich erleichtert sich die Handhabung des Elementes in Folge der definierten Anordnung der Übertragungseinheiten auf der Oberfläche des Kerns sowie der Möglichkeit, bei Bedarf flüssige Dichtungsmittel, wie Petrolate, im gesamten Querschnitt des Elementes zu vermeiden.

In einer vorteilhaften Ausgestaltung der Erfindung ist das optische Element eine Bündelader oder Bestandteil einer Bündelader, wobei die Übertragungseinheiten optische Fasern, z. B. Glasfasern sind. Ferner ist denkbar, daß das optische Element ein Kabel ist und die Übertragungseinheiten Hohl- oder Bündeladern sind. Dabei können die Bündeladern ihrerseits Elemente mit dem vorbeschriebenen Aufbau sein.

Anstelle einer exakt parallelen Ausrichtung zum Element ist es zweckmäßig, die Übertragungseinheiten um den Kern zu verseilen oder mit geringen Wellungen darauf anzuordnen. Damit wird ihre Beschädigungen bei einer Biegung des Elementes vermieden.

Weiterhin besteht die Möglichkeit, auch wasserdichte Blindelemente oder elektrische Leiter auf der Oberfläche des Kerns anzuordnen, zwischen denen die optischen Übertragungseinheiten verlaufen. Vorzugsweise besitzen die Blindelemente bzw. Leiter den gleichen Außendurchmesser wie die Übertragungseinheiten, so daß sie bei dichter Packung gemeinsam eine Lage etwa konstanter Dicke auf der Oberfläche des Kerns bilden.

Der Kern besteht bevorzugt aus einem mechanisch hochbelastbaren Material, das insbesondere eine hohe Zugbelastbarkeit aufweist. Daher wird vorgeschlagen, daß das Kernmaterial ein faserverstärkter Kunststoff, insbesondere glasfaserverstärkter Kunststoff, oder Stahl ist.

Der innere Aufbau des Kerns ist im Rahmen der Erfindung beliebig, soweit er den mechanischen Anforderungen entspricht. Beispielsweise ist denkbar, daß der Kern ein Rohr ist, also einen ringförmigen Querschnitt aufweist. In diesem Fall besteht die Möglichkeit, daß auch im Inneren des Kerns eine oder mehrere optische Fasern verlaufen, beispielsweise eine Bündelader.

Eine weitere Verringerung der Menge des Schmelzklebers im Element ist erreichbar, indem die Oberfläche des Kerns mit umlaufenden Streifen des Klebers versehen ist, die voneinander in Längsrichtung des Elementes beabstandet sind.

Kern und Übertragungseinheiten werden von einer wasserdichten Hüllschicht umschlossen, beispielsweise einer Aderhülle oder einem Kabelmantel. Die Hüllschicht bzw. der Mantel kann aus einer oder mehreren Lagen bestehen, etwa aus Metall oder Kunststoffen, und zum Beispiel eine Aluminiumschicht als Wassersperre oder eine Zugentlastung umfassen. Zwischenräume zwischen der Hüllschicht und den Übertragungseinheiten beinhalten vorzugsweise wasserquellbare Elemente, etwa ein Quellvlies, eine Quellfolie oder Quellfäden. Dabei können die quellbaren Elemente auch aus einem zugfesten Material, wie Aramid, Glasfasern oder Polyethylen, etwa in Form von Rovings, bestehen, die mit einer quellbaren Beschichtung versehen sind. Denkbar sind auch Verbundelemente aus zugfesten Einheiten und quellbaren Vliesen. Somit besteht die Möglichkeit, daß die quellbaren Elemente ihrerseits als Zugentlastung dienen. Zudem können die quellbaren Elemente auf der vom Kern abgewandten Seite eine flüssige, aushärtbare Beschichtung aufweisen, die zur Raumfüllung beiträgt, z. B. einen Schmelzkleber. Dabei ermöglicht die Beschichtung im ausgehärteten Zustand eine kraftschlüssige Verbindung der quellbaren Elemente mit dem Mantel. Auf diese Weise entsteht ein trockenes, gut handhabbares Kabel ohne flüssige Füllmasse. Alternativ ist denkbar, speziell im Fall einer optischen Ader, Räume zwischen den Übertragungseinheiten und der Hüllschicht mit einem hydrophoben Medium auszufüllen, vorzugsweise einer thixotropen Masse.

Das Einbringen des Heißschmelzklebers in das Element erfolgt zweckmäßig durch Beschichtung des Kerns mit dem flüssigen Kleber, vorzugsweise in einer Tauchbeschichtung. Zu diesem Zweck wird der Kern z. B. in Längsrichtung durch ein mit dem heißen Klebstoff gefülltes Volumen bewegt, aus dem er durch eine Öffnung austritt, deren Durchmesser die Schichtdicke auf der Oberfläche bestimmt. Nachfolgend werden die Übertragungseinheiten auf die flüssige Klebstoffschicht aufgebracht, so daß der Klebstoff Hohlräume zwischen Übertragungseinheiten und Kern ausfüllt. Auf diese Weise lassen sich dünne Klebstoffschichten mit geringer Materialmenge bei sicherer Längsabdichtung der Hohlräume aufbringen.

Vorteilhafte Ausführungsbeispiele des erfindungsgemäßen optischen Elementes werden nachfolgend anhand der prinzipienhaften Zeichnung beschrieben. Sie zeigt
- Fig. 1:: Querschnitt durch eine Bündelader
- Fig. 2:: Querschnitt durch ein Kabel.

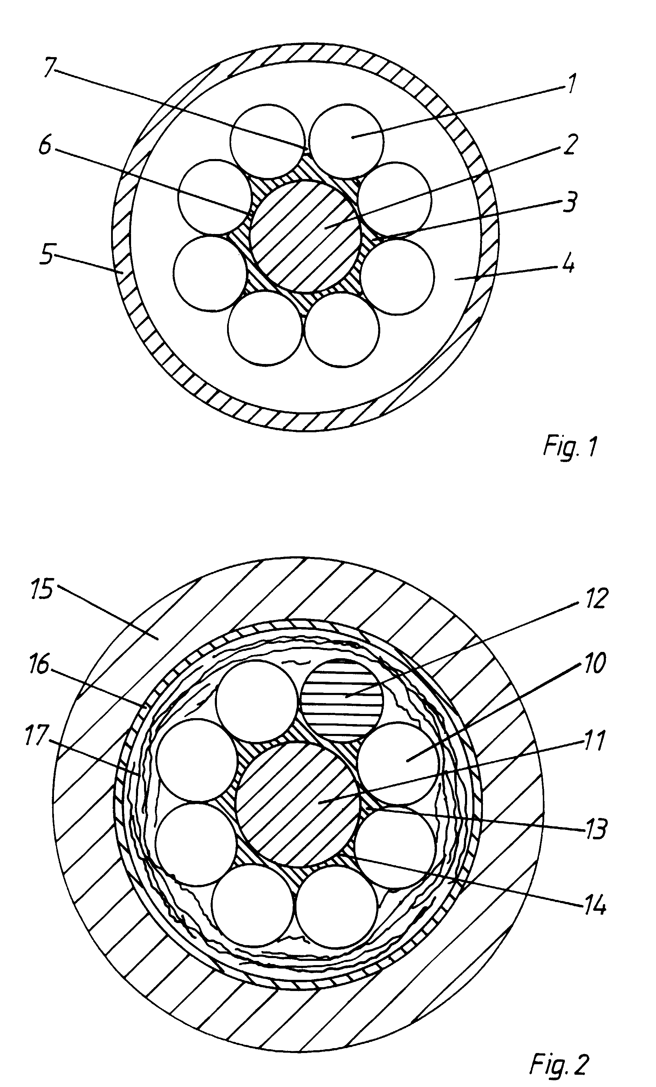

Die in Fig. 1 wiedergegebene Bündelader umfaßt als Übertragungseinheiten mehrere optische Fasern (1), z. B. aus einem lichtwellenleitenden Glaskern mit einer oder mehreren außenseitigen Kunststoffbeschichtungen. Um die Handhabung zu erleichtern und die Zugfestigkeit der Ader zu verbessern, sind die Fasern (1) auf einem Kern (2) festgelegt, der aus einem zugfesten Material, etwa glasfaserverstärktem Kunststoff, besteht. Die Fixierung erfolgt mit einer Schicht (3) eines Heißschmelzklebers, deren mittlere Dicke kleiner als der Radius der Fasern ist, so daß nur eine geringe Klebstoffmenge benötigt wird. Außenseitig sind Kern (2) und Fasern (1) von einem wasserabweisenden, thixotropen Gel (4) umgeben, welches die Hüllschicht (5) der Ader ausfüllt.

Zwischen der Oberfläche (6) des Kerns (2) und den Fasern (1) verbleiben gegebenenfalls geringe Hohlräume (7) und Spalte, in die weder der Klebstoff noch das Gel (4)eindringt. Um zu vermeiden, daß sich Feuchtigkeit in diesem Bereich in Längsrichtung der Ader ausbreitet, ist der Klebstoff wasserquellbar. Somit verschließt er beim Eindringen von Feuchtigkeit verbleibende Hohlräume und bewirkt eine sichere Längsabdichtung der Ader.

Fig. 2 zeigt den Querschnitt durch ein optisches Kabel, bei dem die Übertragungseinheiten Bündeladern (10) sind, die um einen zug- und stauchfesten Kern (11) verseilt sind. Die Fixierung der Bündeladern (10), von denen gegebenenfalls eine oder mehrere durch Blindelemente (12) ersetzt sind, erfolgt mit einer Schicht (13) eines wasserquellbaren Heißschmelzklebers, der auf die Oberfläche (14) des Kerns aufgebracht ist. Außenseitig ist das Kabel von einem Mantel (15) umschlossen, der gegebenenfalls zugfeste Elemente oder eine Aluminiumfolie (16) als wasserdichte Sperrschicht umfaßt. Im Zwischenraum von Mantel (15) und Bündelader (10) ist ein Vlies (17) angeordnet, daß aus einem Kunststoffträger besteht, der mit einem wasserquellbaren Material beschichtet ist. Auf diese Weise ist eine sichere Längswasserdichtigkeit des Kabels über seinen gesamten Querschnitt erreichbar, wobei flüssige Materialien zur Abdichtung vollständig vermieden werden.

## Patentansprüche

1. Langgestrecktes optisches Element mit einem Kern (2, 11), auf dessen Oberfläche (6, 14) mehrere optische Übertragungseinheiten, die in Längsrichtung des Elementes verlaufen, mit einer Schicht (3, 13) eines Heißschmelzklebers fixiert sind, wobei die Schicht (3, 13) durch Hohlräume (7) verläuft, die zwischen der Oberfläche (6, 14) des Kerns (2, 11) und den Übertragungseinheiten vorhanden sind, dadurch gekennzeichnet, daß der Schmelzkleber wasserquellbar ist und die Schichtdicke des Schmelzklebers kleiner als der Durchmesser der Übertragungseinheiten ist.

2. Element nach Anspruch 1, dadurch gekennzeichnet, daß die Übertragungseinheiten optische Fasern (1) sind.

3. Element nach Anspruch 1 oder 2, dadurch gekennzeichnet, daß die Übertragungseinheiten Hohl- oder Bündeladern (10) sind.

4. Element nach einem der vorhergehenden Ansprüche, dadurch gekennzeichnet, daß die Übertragungseinheiten um den Kern (2, 11) verseilt sind.

5. Element nach einem der vorhergehenden Ansprüche, dadurch gekennzeichnet, daß Blindelemente (12) und/oder elektrische Leiter auf der Oberfläche (6, 14) des Kerns (2, 11) angeordnet sind.

6. Element nach einem der vorhergehenden Ansprüche, dadurch gekennzeichnet, daß der Kern (2, 11) aus einem faserverstärkten Kunststoff oder Stahl besteht.

7. Element nach einem der vorhergehenden Ansprüche, dadurch gekennzeichnet, daß der Kern (2, 11) einen ringförmigen Querschnitt aufweist.

8. Element nach Anspruch 7, dadurch gekennzeichnet, daß der Kern (2, 11) eine optische Faser umfaßt.

9. Element nach einem der vorhergehenden Ansprüche, dadurch gekennzeichnet, daß die Schicht (3, 13) des Schmelzklebers aus voneinander in Längsrichtung des Elementes beabstandeten Abschnitten auf der Oberfläche (6, 14) des Kerns (2, 11) besteht.

10. Element nach einem der vorhergehenden Ansprüche, dadurch gekennzeichnet, daß Zwischenräume zwischen den Übertragungseinheiten und einer wasserdichten Hüllschicht (5), die den Kern (2, 11) und die Übertragungseinheiten umschließt, wasserquellbare Elemente umfassen oder mit einem hydrophoben Medium gefüllt sind.

11. Verfahren zur Herstellung eines optischen Elementes nach einem der vorhergehenden Ansprüche, dadurch gekennzeichnet, daß der Kern (2, 11) in einer Tauchbeschichtung mit dem Schmelzkleber beschichtet wird und die Übertragungseinheiten auf die flüssige Klebstoffschicht aufgelegt werden.
